# EUROPÄISCHE PATENTSCHRIFT

(11) **EP 2 507 311 B1**
(45) Veröffentlichungstag und Bekanntmachung des Hinweises auf die Patenterteilung: **20.08.2014**
(21) Anmeldenummer: 10782327.0
(22) Anmeldetag: 01.12.2010
(51) Int. Cl.: C08K 5/3467, C08K 5/3492, B32B 27/18

(54) **POLYCARBONATZUSAMMENSETZUNGEN MIT PHENOLISCH SUBSTITUIERTEM TRIAZINDERIVAT**
POLYCARBONATE COMPOSITIONS COMPRISING A PHENOLIC SUBSTITUTED TRIAZINE DERIVATIVE
COMPOSITIONS DE POLYCARBONAT AVEC UNE TRIAZINE À SUBSTITUTION PHENOLIQUE

(30) Priorität: 05.12.2009 DE 102009057231
(43) Veröffentlichungstag der Anmeldung: 10.10.2012
(73) Patentinhaber: Bayer Intellectual Property GmbH, 40789 Monheim (DE)
(72) Erfinder: MEYER, Alexander, 40489 Düsseldorf (DE); RÜDIGER, Claus, 47829 Krefeld (DE); BLASCHKE, Ulrich, 47829 Krefeld (DE); WAGNER, Michael, 47443 Moers (DE)
(74) Vertreter: BIP Patents
(86) Internationale Anmeldenummer: PCT/EP2010/068629
(87) Internationale Veröffentlichungsnummer: WO 2011/067282

(56) Entgegenhaltungen:
- WO-A1-96/28431
- WO-A1-02/077087
- DE-A1- 10 135 795

## Beschreibung

Die vorliegende Erfindung betrifft Zusammensetzungen enthaltend Polycarbonat und bestimmte Mengen eines Triazins, deren Herstellung und Verwendung zur Herstellung von Formteilen, insbesondere von Platten und Rohren mit optischer Qualität, nach einem Extrusionsverfahren.

Polymere Formmassen enthaltend Triazinverbindungen sind an sich bekannt und vielfältig in der Literatur beschrieben worden. So finden solche Verbindungen u.a. Verwendung bei der Stabilisierung von organischen Polymeren, insbesondere gegen die Schädigungen durch UV Strahlung. Eine solche UV-Schutzausrüstung ist insbesondere für Materialien von Bedeutung, die in Anwendungen mit Witterungsbeanspruchung zum Einsatz kommen.

Die DE 197 39 797 beispielsweise beschreibt Stabilisatorgemische enthaltend Verbindungen vom Typ 2,4,6-Triphenyl-1,3,5-triazin und 2-(4-Phenylphenyl)-4,6-diaryl-1,3,5-triazin. Die Gemische werden zur Stabilisierung organischer Materialien gegen die Schädigung durch Licht, Sauerstoff oder Hitze verwendet.

Die WO 99/55471 A beschreibt die Herstellung UV-absorbierender Beschichtungen auf organischen oder anorganischen Substraten nach einem Plasma-Verfahren unter Verwendung von Hydroxyphenyl-s-triazinen als UV Absorber.

In der WO 96/28431 A werden Biphenyl-substituierte Triazine als Stabilisatoren für organische Polymere gegen die Schädigung durch Licht, Sauerstoff oder Hitze zum Beispiel zur Anwendung in Textilfasermaterialien oder Sonnencremes offenbart.

Ringöffnende Metathese-Polymerisationen mit oligomeren UV-Absorbern, welche auch solche mit Triazin-Strukturen umfassen, legt die WO 01/62821 A1 offen.

Die DE 197 39 748 A1 beschreibt ein farbfotographisches Aufzeichnungsmaterial basierend auf mehreren Schichten, wobei mindestens eine der genannten Schichten UV-Absorber mit Triazin-Struktur enthält.

Transparente Artikel geringer Dicke aus Polyolefinen, Polyestern oder Polyamiden sind Gegenstand der US-A 2003/0236327. Die genannten Polymere sind gegen die Einwirkung von Licht, Sauerstoff, Hitze oder die Einwirkung von aggressiven Chemikalien durch die Verwendung von UV-Absorbern des Hydroxyphenyltriazin-Typs stabilisiert.

Die DE 197 39 781 A1 offenbart Verbindungen vom Typ der Hydroxyphenyl-triazine mit cyclischen Glycidylethersubstituenten, ein synergistisches Stabilisatorgemisch enthaltend diese Verbindungen sowie deren Verwendung zum Stabilisieren von organischem Material.

EP 825 226 A2 beschreibt Polycarbonatzusammensetzungen mit geringer Belagbildung, die eine Kombination von substituiertem Arylphosphit mit einem Schmelzpunkt von 170 °C und einem substituiertem Triazin mit einem Schmelzpunkt von mindestens 140 °C enthält. Die erforderlichen Mengen an Triazin sind mit 1 bis 7 Gew.%, bevorzugt 3 bis 4 Gew.% deutlich größer als die Mengen (0,0001 Gew.-% bis 0,1000 Gew.-%), die in der vorliegenden Erfindung beansprucht werden.

Die Verwendung von 2-(2,4-Dihydroxy)phenyl-4,6-di(4-phenyl)phenyl-1,3,5-triazin in Extrusionsmaterialien sowie die Kombination von bestimmten Konzentrationen von 2-(2,4-Dihydroxy)phenyl-4,6-di(4-phenyl)phenyl-1,3,5-triazin und weiteren UV-Absorbern auf Benzotriazol- und/oder Triazinbasis für Extrusionsmaterialien sind im Stand der Technik nicht beschrieben.

Beispiele für Anwendungen von thermoplastischen Kunststoffen, bei den eine besondere Witterungsbeanspruchung vorliegt, sind Platten aus thermoplastischen Kunststoffen für Architekturverscheibungen. Hierbei können unterschiedliche Plattentypen wie Massivplatten, Stegplatten, Doppelstegplatten, Wellplatten, Profile, Mehrschichtlaminate oder andere Ausführungsformen eine Rolle spielen.

Problematisch beim Einsatz der bekannten niedermolekularen Additive auf Triazinbasis ist jedoch, dass diese Stoffe leicht dazu neigen, unter Verarbeitungsbedingungen auszugasen bzw. aus dem zu verarbeitenden Material auszutreten, und so z.B. zu Belägen auf Verarbeitungsmaschinen führen können. So kann es beispielweise bei der Herstellung von Massiv- oder Stegplatten auf den Kalanderwalzen zu Ablagerungen von derartigen niedermolekularen Stoffen kommen. Häufig wird diese Problematik durch zusätzliche niedermolekulare Anteile wie Oligomere, die aus dem zu verarbeitenden Polymer stammen, sowie beispielsweise von Entformern und Flammschutzmitteln verschärft. Insbesondere bei Materialien, die einen hohen UV-Schutz benötigen, wie z.B. bei Extrusionsartikeln wie Massiv- oder Doppelstegplatten, spielt der Anteil und die Qualität des UV-Absorbers eine entscheidende Rolle.

Es bestand daher die Aufgabe, eine Polycarbonatzusammensetzung zu entwickeln, die eine geringe Neigung zu Ausgasung bzw. Belagbildung aufweist und neben Spritzgusskörpern insbesondere für Extrusionsartikel wie Massiv- oder Stegplatten bzw. für entsprechend coextrudierte Platten geeignet ist. Dazu sollten vor allem UV-Absorber, die eine hohe Effektivität im Sinne des UV-Schutzes kombiniert mit einer geringen Flüchtigkeit aufweisen, geeignet sein. Völlig überraschend konnte jedoch gezeigt werden, dass in Polycarbonatzusammensetzungen der erfindungsgemäße Zusatz von 0,0001 Gew.-% bis 0,1000 Gew.-% 2-(2,4-Dihydroxy)phenyl-4,6-di(4-phenyl)phenyl-1,3,5-triazin die Ausdampfneigung und somit die Belagsbildung gegenüber unadditiviertem Polycarbonat reduziert, obwohl es sich bei dem erfindungsgemäßen Triazin nicht um eine polymere Verbindung handelt. 0,0001 Gew.-% bis 0,1000 Gew.-%, bevorzugt 0,001 Gew.-% bis 0,090 Gew.-% 2-(2,4-Dihydroxy)phenyl-4,6-di(4-phenyl)phenyl-1,3,5-triazin wirken somit als Emmissionsinhibitor. Ferner wurde überraschend gefunden, dass bestimmte Polycarbonatzusammensetzungen enthaltend bestimmte Konzentrationen von besonderen UV-Absorbern das Polycarbonat besonders effektiv vor UV-Strahlen schützen und gleichzeitig eine äußerst geringe Neigung zu Ausgasung bzw. Belagsbildung aufweisen. Auch wenn besonders schwerflüchtige UV-Absorber eingesetzt wurden, konnte nicht davon ausgegangen werden, dass die erfindungsgemäße Zusammensetzung eine derart geringe Ausdampfneigung aufweist.

Die erfindungsgemäßen Zusammensetzungen eignen sich somit besonders zur Herstellung von thermoplastisch verarbeiteten, d.h. extrudierten und spritzgegossenen Formteilen, und insbesondere von extrudierten Formteilen wie z.B. Platten oder Rohren, in guter optischer Qualität und Bewitterungsstabilität. Mit guter optischer Qualität ist im Sinne der vorliegenden Erfindung die Belagsbildung auf den Formteilen durch Ausdampfneigung von Additiven vor, während und nach der Bewitterung gemeint. Insbesondere lassen sich auch transparente Zusammensetzungen mit hohen Transmissionsgraden, > 75% und > 80 %, und erfindungsgemäße Formteile daraus herstellen.

In der vorliegenden Erfindung beziehen sich alle Gewichtsprozent-Angaben (Gew.-%) - sowohl die voranstehenden als auch die folgenden - auf den prozentualen Anteil an dem Gewicht der Gesamtzusammensetzung:

Die vorliegende Erfindung betrifft also Zusammensetzungen enthaltend Polycarbonat und 0,0001 1 Gew.-% bis 0,1000 Gew.-%, bevorzugt 0,001 Gew.% bis 0,090 Gew.-% 2-(2,4-Dihydroxy)phenyl-4,6-di(4-phenyl)phenyl-1,3,5-triazin, besonders bevorzugt 0,001 Gew.-% bis 0,070 Gew.-% 2-(2,4-Dihydroxy)phenyl-4,6-di(4-phenyl)phenyl-1,3,5-triazin, deren Verwendung zur Herstellung von Formteilen, insbesondere zur Herstellung von Platten und Rohren mit hoher optischer Qualität, nach einem Extrusionsverfahren.

Die vorliegende Erfindung betrifft weiterhin Zusammensetzungen enthaltend Polycarbonat und 0,0001 Gew.-% bis 0,1000 Gew.-%, bevorzugt 0,001 Gew.-% bis 0,090 Gew.-% 2-(2,4-Dihydroxy)phenyl-4,6-di(4-phenyl)phenyl-1,3,5-triazin sowie eines weiteren UV-Absorbers aus der Gruppe der Benzotriazole und / oder der Triazine in Gehalten von 0,0001 Gew.-% bis 10,0000 Gew.-% , die zur Herstellung von Formteilen, insbesondere zur Herstellung von Platten und Rohren mit hoher optischer Qualität nach einem Extrusionsverfahren, verwendet werden.

Insbesondere ist die Zusammensetzung zur Verwendung für die Herstellung von Coextrusionsschichten auf solchen Formteilen geeignet.

Gemäß einem Verfahren zur Herstellung der erfindungsgemäßen Zusammensetzung werden Polycarbonat und 0,0001 Gew.-% bis 0,1000 Gew.-%, bevorzugt 0,001 Gew.-% bis 0,090 Gew.-% 2-(2,4-Dihydroxy)phenyl-4,6-di(4-phenyl)phenyl-1,3,5-triazin und ggf. ein weiterer UV-Absorber aus der Gruppe der Benzotriazole und / oder der Triazine in Gehalten von 0,0001 Gew.-% bis 10,0000 Gew.-% zusammengeführt, vermischt und homogenisiert, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Im Rahmen der vorliegenden Erfindung wurde gefunden, dass Zusammensetzungen enthaltend Polycarbonat und 2-(2,4-Dihydroxy)phenyl-4,6-di(4-phenyl)phenyl-1,3,5-triazin in bestimmten Mengenverhältnissen zu Materialien mit geringer Ausdampfneigung führen und gleichzeitig hervorragend gegen den Einfluss schädlicher UV-Strahlen geschützt sind. Insbesondere wird in Gegenwart von weiteren erfindungsgemäßen UV-Absorbern wie Benzotriazolen und anderen Triazinen die Gesamtausdampfung reduziert im Vergleich zu den Einstellungen ohne 2-(2,4-Dihydroxy)phenyl-4,6-di(4-phenyl)phenyl-1,3,5-triazin. Diese Zusammensetzungen eignen sich insbesondere für Substratmaterialien für Extrusionskörper wie Platten oder Folien oder als Substratmaterialien für Coextrusionsschichten.

Die vorliegende Erfindung betrifft somit Zusammensetzungen enthaltend Polycarbonat und bevorzugt 0,0001 Gew.-% bis 0,1000 Gew.-%, bevorzugt 0,001 Gew.-% bis 0,090 Gew.-% 2-(2,4-Dihydroxy)phenyl-4,6-di(4-phenyl)phenyl-1,3,5-triazin. Die vorliegende Erfindung betrifft ferner Zusammensetzungen enthaltend Polycarbonat und 0,0001 Gew.-% bis 0,1000 Gew.-%, bevorzugt 0,001 Gew.-% bis 0,090 Gew.-% 2-(2,4-Dihydroxy)phenyl-4,6-di(4-phenyl)phenyl-1,3,5-triazin sowie eines weiteren UV-Absorbers aus der Gruppe der Benzotriazole und / oder der Triazine in Gehalten von 0,0001 Gew.-% bis 10,0000 Gew.-%.

Weiterhin betrifft die vorliegende Erfindung die Verwendung von Zusammensetzungen enthaltend Polycarbonat und 0,0001 Gew.-% bis 0,10 Gew.-%, bevorzugt 0,001 Gew.-% bis 0,05 Gew.-% 2-(2,4-Dihydroxy)phenyl-4,6-di(4-phenyl)phenyl-1,3,5-triazin zur Herstellung von Formteilen, insbesondere zur Herstellung von Platten und Rohren mit hoher optischer Qualität nach einem Extrusionsverfahren sowie die Formteile und deren Herstellung selbst.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die geeigneten Polycarbonate haben mittlere Molekulargewichte M̅_{w} von 10.000 bis 50.000, vorzugsweise von 10.000 bis 40.000 und insbesondere von 16.000 bis 40.000, ermittelt durch Messung der relativen Lösungsviskosität in Dichlomrethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester. Celluloscester, Carl Hanser Verlag München, Wien 1992, S. 118-145 sowie auf EP-A 0 517 044 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeurnesterungsprozess Diphenylcarbonat bzw. Dimethylcarbonat, dargestellt. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan (Bisphenol-TMC) besonders bevorzugt. Diese und weitere Bisphenol- bzw. Diolverbindungen, die sich für die Polycarbonatsynthese einsetzen lassen, sind unter anderem offenbart in WO-A 2008037364 (s.7, Z. 21 bis s. 10, Z. 5), EP-A 1 582 549 ([0018] bis [0034]), WO-A 2002026862 (S. 2, Z. 20 bis S. 5, Z. 14), WO-A 2005113639 (S. 2, Z.1 bis S. 7, Z. 20).

Die Polycarbonate können linear oder verzweigt sein. Es könne auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009 und DE-A 25 00 092 (erfindungsgemäße 3,3-bis-(4-Hydroxyaryl-oxindole, s. jeweils gesamtes Dokument), DE-A 42 40 313 (s. S. 3, Z. 33 bis 55), DE-A 19 943 642 (s. S. 5, Z. 25 bis 34) und US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A 1 506 249 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'-oder 4,4'-Diphenyldicarbonsäure und Benzophenondicarbonsäuren.

Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Den erfindungsgemäßen Homopolycarbonaten, Copolycarbonaten und thermoplastische Polyestercarbonaten können noch andere Kunststoffe wie aromatische Polyester wie zum Beispiel Polybutylenterephthalat oder Polyethylenterephthalat, Polyamide, Polyimide, Polyesteramide, Polyacrylate und Polymethacrylate wie zum Beispiel Polyalkyl(meth)acrylate und hier insbesondere Polymethylmethacrylat, Polyacetale, Polyurethane, Polyolefine, halogenhaltige Polymere, Polysulfone, Polyethersulfone, Polyetherketone, Polysiloxane, Polybenzimidazole, Harnstoff-Formaldehyd-Harze, Melamin-Formaldehydharze, Phenol-Formaldehyd-Harze, Alkydharze, Epoxidharze, Polystyrole, Copolymere des Styrols oder des alpha-Methylstyrols mit Dienen oder Acrylderivaten, Pfropfpolymerisate auf Basis Acrylnitril/-Butadien/Styrol oder auf Acrylatkautschuk basierende Pfropfcopolymerisate (s. beispielsweise die in EP-A 640 655 beschriebenen Pfropfpolymerisate) beziehungsweise Siliconkautschuke in bekannter Weise zugemischt werden, beispielsweise durch Compoundierung.

Den erfindungsgemäßen Polycarbonaten sowie den ggf. weiteren enthaltenen Kunststoffen können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination). Solche Verbindungen werden z. B. in WO 99/55772, S. 15 - 25, EP 1 308 084 und in den entsprechenden Kapiteln des "Plastics Additives Handbook" , ed. Hans Zweifel, 5th Edition 2000, Hanser Publishers, Munich beschrieben.

Hierbei wird 2-(2,4-Dihydroxy)phenyl-4,6-di(4-phenyl)phenyl-1,3,5-triazin in erfindungsgemäßen Mengen von 0,0001 Gew.-% bis 0,1000 Gew.-%, bevorzugt 0,001 Gew.-% bis 0,090 Gew.-% jeweils bezogen auf die Gesamtzusammensetzung eingesetzt. In einer weiteren Ausführungsform enthält die Zusammensetzung mindestens einen zusätzlichen UV-Absorber ausgewählt aus der Gruppe der Verbindungen enthaltend Benzotriazole und und Triazine in Gehalten von 0,0001 bis 10,0000 Gew.-% bezogen auf die Gesamtzusammensetzung. Für den Fall, dass es sich bei dem / den zusätzlichen UV-Absorber(n) um Benzotriazole handeln sollte, können in bestimmten Ausführungsformen der Erfindung Einsatzmengen von 0,0001 Gew.-% bis 0,4000 Gew.-% bevorzugt, und Einsatzmengen von 0,0001 Gew.-% bis 0,0500 Gew.-%, jeweils bezogen auf das Gewicht der Gesamtzusammensetzung, besonders bevorzugt sein.

Unter zusätzlichen UV-Absorbern aus der Gruppe der Triazine sollen im Rahmen der vorliegenden Erfindung beispielsweise 2-[2-Hydroxy-4-(2-ethylhexyl)oxy]phenyl-4,6-di(4-phenyl)plienyl-1,3,5-triazin (CAS No. 204583-39-1), 2-(4,6-diphenyl-1,3,5-triazin-2-yl)-5-(hexyloxy)-phenol (CAS No. 147315-50-2), 2-[4,6-bis(2,4-dimethylphenyl)-1,3,5-triazin-2-yl]-5-[2-hydroxy-3-(octyloxy)propoxy]-phenol (CAS No. 214692-65-6) sowie 2,4-Bis(4-biphenylyl)-6-[2-hydroxy-4-[(octyloxycarbonyl)ethylideneoxy]phenyl]-s-triazine (CAS No. 304671-49-6) verstanden sein, wobei die vorliegende Erfindung nicht durch vorgenannte Aufzählung beschränkt sein soll.

Unter zusätzlichen UV-Absorbern aus der Gruppe der Benzotriazole sollen im Rahmen der vorliegenden Erfindung beispielsweise 2-(2H-benzotriazol-2-yl)-4-(1,1-dimethylethyl)-6-(1-methylpropyl)-phenol (CAS No. 3 6 4 3 7-37-3), 2,2'-methylenebis[6-(2H-benzotriazol-2-yl)-4-(1,1,3,3-tetramethylbutyl)-phenol (CAS No. 103597-45-1), 2-(2H-benzotriazol-2-yl)-4-(1,1,3,3-tetramethylbutyl)-phenol (CAS No. 3147-75-9), 2-(2H-benzotriazol-2-yl)-4,6-bis(1-methyl-1-phenylethyl)-phenol (CAS No. 70321-86-7), 2-(2H-benzotriazol-2-yl)-4,6-bis(1,1-dimethylethyl)-phenol (CAS No. 3846-71-7), wobei die vorliegende Erfindung nicht durch vorgenannte Aufzählung beschränkt sein soll.

### Herstellung der Zusammensetzungen:

Die Herstellung einer Zusammensetzung enthaltend Polycarbonat und 0,0001 Gew.-% bis 0,1000 Gew.-%, bevorzugt 0,001 Gew.-% bis 0,090 Gew.-% 2-(2,4-Dihydroxy)phenyl-4,6-di(4-phenyl)phenyl-1,3,5-triazin erfolgt mit gängigen Einarbeitungsverfahren durch Zusammenführung, Vennischen und Homogenisieren von 2-(2,4-Dihydroxy)phenyl-4,6-di(4-phenyl)phenyl-1,3,5-triazin mit Polycarbonat, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind. In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. In einer weiteren Ausführungsform kann bei der Extrusion sogenanntes Rezyklat enthaltend einen oder mehrere der erfindungsgemäßen UV-Absorber hinzugefahren werden.

Das Rezyklat entsteht durch Mahlen / Schreddern von extrudierten Platten auf Basis Polycarbonat, die z.B. aufgrund von hohen Qualitätsanforderungen für manche Anwendung nicht geeignet sind..

### Herstellung coextrudierter Platten:

Platten aus Basis- und optionaler Deckschicht / optionalen Deckschichten werden im Rahmen der vorliegenden Erfindung bevorzugt durch (Co)extrusion hergestellt. Zur Extrusion wird das gegebenenfalls z.B. mittels Trocknung vorbehandelte thermoplastische Granulat dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion des Polycarbonats notwendigen Temperaturen eingestellt, wobei üblicherweise den Herstellerangaben gefolgt werden kann. Die zur Extrusion verwendeten Polycarbonate mit hoher Schmelzeviskosität werden z.B. normalerweise bei Schmelzetemperaturen von 260 °C bis 320 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Die zur Herstellung von coextrudierten Polycarbonatmassivplatten im Rahmen der vorliegenden Erfindung verwendeten Maschinen und Apparate sind im Beispielteil detaillierter beschrieben.

### Beispiele

### a) Ausprüfüngen

a.1) Bewitterung: Die Bewitterung der hergestellten Farbmusterplättchen (opt. Qualität; 60 x 40 x 4 mm; das Granulat wird bei 120 °C für 3 Stunden im Vakuum getrocknet und anschließend auf einer Spritzgussmaschine bei einer Massetemperatur von 300°C und einer Werkzeugtemperatur von 90 °C verspritzt) aus den Materialien der Beispiele 1 - 4 und der gesäten Platten der Beispiele 7 - 10 erfolgte in einem Atlas Ci 65 A Weatherometer mit einer Bestrahlungsstärke von 0.5 W/m² bei 340 nm und einem Trocken/-Beregnungszyklus von 102:18 Minuten gemäß ISO 4892-2A. Die Schwarztafeltemperatur beträgt 65°C, die Probenraumtemperatur 42°C und die Luftfeuchtigkeit 50 ± 10 %.
a.2) Der Yellowness-Index YI wurde mit einem Hunter UltraScanPRO Farbmessgerät gemessen und nach ASTM E313 berechnet.
a.3) Belagstest durch Messung der Kondensatmenge:

Die Erfassung der Kondensatmenge erfolgt durch die Wägung einer Aluminiumfolie mit und ohne Belag. Dabei wird die Belagmenge wie folgt definiert: Kondensatmenge in % = (Gew. Folie der Messung - Folie vor der Messung) /Probengewicht

### Beschreibung des Verfahrens im Detail:

Nach der Trocknung (120°C, 4 h) werden 20 g des Granulats (Beispiele 1 - 6) in ein Schälchen aus Aluminium mit 80 mm Durchmesser und 15 mm Tiefe so eingefüllt, dass der Boden des Schälchens gleichmäßig mit Granulat bedeckt ist. Das befüllte Schälchen wird in einen dafür vorgesehenen Probenraum (85 mm Durchmesser, 50mm Tiefe) eines elektrisch beheizbaren Metallblocks eingebracht und mit einer Aluminiumfolie, 0,03 mm Dicke, 100 mm Durchmesser, verschlossen. Damit die flüchtigen Bestandteile auf der Folie kondensieren können, wird diese während der Messung durch eine Kühlplatte gekühlt. Die Temperatur des Kühlwassers ist auf 20°C eingestellt. Bei der Durchführung der Messung ist zu beachten, dass die Folie den Probenraum gut nach außen hin abdichtet.

Der Metallblock wird in wenigen Minuten auf eine Temperatur von 300°C aufgeheizt. Bei dieser Temperatur verharrt die Probe 4 h, anschließend wird die Prüfapparatur auf Umgebungstemperatur heruntergekühlt. Nach Erreichen der Umgebungstemperatur wird die Aluminiumfolie abgenommen und auf einer Mikrowaage ausgewogen und die Kondensatmenge entsprechend der Definition berechnet.

### b) Herstellung des UV-Absorbers

### b.l ) Herstellung von 2-Chlor-4,6-di-biphenyl-1,3,5-triazin

In einer ausgeheizten Glasapparatur werden 3,6 g (0,147 mol) aktivierte Magnesiumspäne in 50 ml abs. THF suspendiert. Es wird ein Körnchen Iod hinzugegeben. Daraufhin heizt man unter Argon kurzzeitig bis auf 60 °C und stellt dann sowohl Rührer als auch Wärmequelle ab. Es werden dann vorsichtig 34,3 g (0,147 mol) 4-Brombiphenyl gelöst in absolutiertem THF tropfenweise zugegeben. Die Mischung wird dann 2 Stunden unter Rückfluss erhitzt.

Nach Abkühlen wird die Grignard-Lösung tropfenweise zu einer Lösung von 9.2 g (0,05 mol) Cyanurchlorid gelöst in 50 ml absolutiertem THF (in einer trockenen Glasapparatur) getropft (bei ca. 50 °C). Nach 4 Stunden werden 100 ml Toluol hinzugegeben und die Mischung auf 50 ml 12 % HCl-Lösung gegeben. Der Feststoff wird abfiltriert und der Rückstand mit Wasser gewaschen. Man erhält 10,3 g in Form beige-farbener Kristalle.

### b.2) Herstellung von 2-(2,4-Dihydroxyphenyl)-4,6-di-biphenyl-1,3,5-triazin

8.9 g (0.021 mol) von 2-Chlor-4-6-di-biphenyl-1,3,5-triazin (b.1) werden in 100 ml Toluol suspendiert. Es wird eine Spatelspitze AlCl₃ hinzugegeben. Die Lösung wird auf 100 °C erwärmt. 2.35 g (0.021 mol) Resorcin werden portionsweise hinzugegeben. Man erhitzt 12 h unter Rückfluss. Die Reaktionsmischung wird auf Eis/Wasser gegossen. Das Produkt wird abfiltriert und mit Wasser gewaschen.
¹H-NMR (400 MHz; Tetrachlorethan-d2): δ = 13,3 (s, 1 H); 8,70 - 8,65 (m, 5 H); 7,83 - 7,80 (m, 4 H); 7,70 - 7,65 (m, 4 H); 7,50 - 7,40 (m, 6 H); 6,53 - 6,50 (m, 2 H), 5,05 (s, 1 H).

### c) Compoundierung und Ausprüfung von Polycarbonat-Zusammensetzungen:

Die Einrichtung zur Compoundierung besteht aus:
Dosiereinrichtung für die Komponenten
   - einem gleichlaufenden Zweiwellenkneter (ZSK 53 von der Firma Werner & Pfleiderer) mit einem Schneckendurchmesser von 53 mm,
   - einer Lochdüse zur Ausformung von Schmelzesträngen,
   - einem Wasserbad zur Abkühlung und zum Verfestigen der Stränge,
   - einem Granulator.

Mit Hilfe der oben beschriebenen Compoundiereinrichtung werden die folgenden Zusammensetzungen hergestellt. Die Massetemperatur lag dabei jeweils zwischen 330 °C und 335°C.

### Beispiel 1 (Vergleichsbeispiel)

Makrolon^{®} 3108 der Firma Bayer MaterialScience AG, ein nicht additiviertes lineares Homopolycarbonat auf Basis von Bisphenol-A mit einem Schmelzflussindex (MFR) gemäß ISO 1133 von 6,5 g/10 min bei 300°C und 1,2 kg Belastung, wird wie oben beschrieben einem Belagstest bei 300 °C unterworfen. Die Ergebnisse sind in Tabelle 1 aufgeführt.

### Beispiel 2 (Vergleichsbeispiel)

99,95 Gew.-% Makrolon^{®} 3108 der Firma Bayer MaterialScience AG werden mit 0,05 Gew.-% Tinuvin^{®} 1577 (2-(4,6-diphenyl-1,3,5-triazin-2-yl)-5-(hexyloxy)-phenol (CAS Nr. 147315-50-2)) der Firma Ciba Inc. unter den oben beschriebenen Bedingungen compoundiert und der Compound einem Belagstest wie in Beispiel 1 beschrieben unterworfen. Die Ergebnisse sind in Tabelle 1 aufgeführt.

### Beispiel 3 (Vergleichsbeispiel)

99,95 Gew.-% Makrolon^{®} 3108 der Firma Bayer MaterialScience AG werden mit 0,05 Gew.-% Tinuvin^{®} 329 (2-(2'-Hydroxy-5'-(tert.-octyl)-phenyl)-benzotriazol (CAS Nr. 3147-75-9)) der Firma Ciba Inc. unter den oben beschriebenen Bedingungen compoundiert und der Compound einem Belagstest wie in Beispiel 1 beschrieben unterworfen.

### Beispiel 4 (erfindungsgemäß)

99,95 Gew.-% Makrolon^{®} 3108 der Firma Bayer MaterialScience werden mit 0,05 Gew.-% 2-(2,4-Dihydroxy)phenyl-4,6-di(4-phenyl)phenyl-1,3,5-triazin unter den oben beschriebenen Bedingungen compoundiert und der Compound einem Belagstest wie in Beispiel 1 beschrieben unterworfen.

### Beispiel 5 (erfindungsgemäß)

99,90 Gew.-% Makrolon^{®} 3108 der Firma Bayer MaterialScience werden mit 0,05 Gew.-% Tinuvin^{®} 1577 (2-(4,6-diphenyl-1,3,5-triazin-2-yl)-5-(hexyloxy)-phenol (CAS Nr. 147315-50-2)) der Firma Ciba Inc. und 0,05 Gew.-% 2-(2,4-Dihydroxy)phenyl-4,6-di(4-phenyl)phenyl-1,3,5-triazin unter den oben beschriebenen Bedingungen compoundiert und der Compound einem Belagstest wie in Beispiel 1 beschrieben unterworfen.

### Beispiel 6 (erfindungsgemäß)

99,90 Gew.-% Makrolon^{®} 3108 der Firma Bayer MaterialScience werden mit 0,05 Gew.-% Tinuvin^{®} 329 (2-(2'-Hydroxy-5'-(tert.-octyl)-phenyl)-benzotriazol (CAS Nr. 3147-75-9)) der Firma Ciba Inc. und 0,05 Gew.-% 2-(2,4-Dihydroxy)phenyl-4,6-di(4-phenyl)phenyl-1,3,5-triazin unter den oben beschriebenen Bedingungen compoundiert und der Compound einem Belagstest wie in Beispiel 1 beschrieben unterworfen.

Die Ergebnisse der Belagstests mit den Granulaten aus den Beispielen 1 - 6 sind in Tabelle 1 aufgeführt.

**Tabelle 1. Ergebnis der Belagstests**

| | Vergl. Beispiel 1 | Vergl. Beispiel 2 | Vergl. Beispiel 3 | Beispiel 4 | Beispiel 5 | Beispiel 6 |
|---|---|---|---|---|---|---|
| Belagsmenge [%] | 0,021 | 0,024 | 0,060 | 0,016 | 0,023 | 0,040 |

Die Veränderung des Yellowness Index (Δ YI) in Abhängigkeit von der Bewitterungsdauer ist in der nachfolgenden Tabelle 2 dargestellt. Die Messungen des YI erfolgte an einem Hunter UltraScanPRO Farbmessgerät.

**Tabelle 2. Veränderung des Gelbwertes [Yellowness Index (Δ YI)] der Farbmusterplättchen in Abhängigkeit von der Bewitterungsdauer**

| Zeit in h | 0 | 700 | 5600 |
|---|---|---|---|
| Vergl. Beispiel 1 | 0,0 | 8,9 | 20,64 |
| Vergl. Beispiel 2 | 0,0 | 3 | 13,04 |
| Vergl. Beispiel 3 | 0,0 | 3,5 | 14,79 |
| Beispiel 4 | 0,0 | 1,3 | 9,82 |

### d) Herstellung und Ausprüiüng von Polycarbonat-Massivplatten mit Coextrusionsschichten

### d.1) Eingesetzte Materialien

Als Material für die Basisschicht dieser Massivplatten wurde jeweils ein Material verwendet, dass aus 99,95 Gew.-% Makrolon^{®} 3108 und 0,05 Gew.-% Tinuvin^{®} 329 compoundiert wurde. Die Herstellung dieses Compounds erfolgte im Gegensatz zur Herstellung der anderen oben genannten Compounds mit einem herkömmlichen Zweischnecken-Compoundierextruder (ZSK 32) bei für Polycarbonat üblichen Verarbeitungstemperaturen von 280 bis 335 °C. Makrolon^{®} 3108 sowie die Polycarbonatzusammensetzungen der Vergleichsbeispiele 2 und 3 und des Beispiels 4 wurden jeweils zur Herstellung der einseitigen Coextrusionsschichten für Polycarbonat-Massivplatten verwendet.

Für die einseitige Coextrusionsschicht wurden folgende Materialien verwendet:

### Beispiele 7 (Vergleichsbeispiel):

Es wurde Makrolon^{®} 3108 verwendet.

### Beispiel 8 (Vergleichsbeispiel):

Es wurde der Compound enthaltend 0,05 Gew.-% Tinuvin^{®} 1577 aus Beispiel 2 verwendet.

### Beispiel 9 (Versleichsbeispiel):

Es wurde der Compound enthaltend 0,05 Gew.-% Tinuvin^{®} 329 aus Beispiel 3 verwendet.

### Beispiel 10 (erfindungsgemäB):

Es wurde der Compound enthaltend 0,05 Gew.-% 2-(2,4-Dihydroxy)phenyl-4,6-di(4-phenyl)phenyl-1,3,5-triazin aus Beispiel 4 verwendet.

### d.2) Beschreibung des Coextrusionsverfahrens

Es wurden 4 mm Polycarbonat-Massivplatten mit einer einseitigen 50 µm dicken Coextrusionsschicht mit folgenden Maschinen und Apparaten hergestellt:
- dem Hauptextruder mit einer Schnecke der Länge 33 D und einem Durchmesser von 70 mm mit Entgasung
- einem 2-Schicht Coextrusionsadapter (Festadapter der Fa. Bexsol, Italy)
- einem Coextruder zum Aufbringen der Deckschicht mit einer Schnecke der Länge 25 D und einem Durchmesser von 35 mm
- einer speziellen Coextrusions-Breitschlitzdüse mit 430 mm Breite
- einem Glättkalander
- einer Rollenbahn '
- einer Abzugseinrichtung
- einer Ablängvorrichtung (Säge)
- einem Ablagetisch.

Die einseitig mit einer Coextrusionsschicht versehenen Massivplatten wurden wie folgt hergestellt: Das Polycarbonat-Granulat des Basismaterials wurde dem Fülltrichter des Hauptextruders zugeführt und über die Zylinder/Schnecke aufgeschmolzen und gefördert. Die Temperaturen der einzelnen Gehäuse des Hauptextruders lagen bei 230° bis 290°C, die resultierende Massetemperatur bei ca. 300 °C. Die Wellendrehzahl lag zwischen 50 und 56 U/min. Das Material für die einseitige Coextrusionsschicht wurde über den Fülltrichter des Coextruders zugeführt. Die Massetemperatur des Coextruders lag bei ca. 285 °C.

Die mit Hilfe dieser Düse extrudierten Platten weisen eine Dicke von ca. 4 mm und eine Plattenbreite von 400 mm.

### d.3) Ausprüfung der Platten

Aus den Platten wurden Plättchen der Abmessung 60 x 40 x 4 mm gesägt und genau wie die Farbmusterplättchen aus den Compounds der Beispiele 1 - 4 bewittert (die Seite mit der Coextrusionsschicht der Bewitterungslampe zugewandt).

Die Veränderung des Yellowness Index (Δ YI) in Abhängigkeit von der Bewitterungsdauer ist in der nachfolgenden Tabelle 3 dargestellt:

**Tabelle 3. Veränderung des Gelbwertes [Yellowness Index (Δ YI)] der coextrudierten Platten in Abhängigkeit von der Bewitterungsdauer**

| Zeit in h | 0 | 700 | 2800 |
|---|---|---|---|
| Vergl. Beispiel 7 | 0,0 | 3,6 | 11,1 |
| Vergl. Beispiel 8 | 0,0 | 3,3 | 10,2 |
| Vergl. Beispiel 9 | 0,0 | 3,7 | 11,3 |
| Beispiel 10 | 0,0 | 3,1 | 9,6 |

Die Beispiele belegen die hohe Wirksamkeit des Dihydroxytriazins als UV-Schutzmittel bei extrudierten Platten. Gleichzeitig wird durch den Einsatz von Dihydroxytriazin eine geringe Ausdampfneigung erreicht. Dies gilt nicht nur bei alleinigem Einsatz dieser Verbindung sondern insbesondere in Kombination mit anderen UV-Absorbern, insbesondere mit Benzotriazolen und / oder anderen Triazinverbindungen.

## Patentansprüche

1. Zusammensetzung enthaltend Polycarbonat und 0,0001 Gew.-% bis 0,1000 Gew.-%, bevorzugt 0,001 Gew.-% bis 0,090 Gew.-% 2-(2,4-Dihydroxy)phenyl-4,6-di(4-phenyl)phenyl-1,3,5-triazin.

2. Zusammensetzung gemäß Anspruch 1, zusätzlich enthaltend 0,0001 Gew.-% bis 10,0000 Gew.-% mindestens eines weiteren UV-Absorbers.

3. Zusammensetzung gemäß Anspruch 2, wobei der mindestens eine weitere UV-Absorber ausgewählt ist aus der Gruppe der Verbindungen enthaltend Benzotriazole und Triazine.

4. Zusammensetzung gemäß Anspruch 3, wobei die Zusammensetzung 0,0001 Gew.-% bis 10,000 Gew.-%, bevorzugt 0,0001 Gew.-% bis 0,4000 Gew.-%, besonders bevorzugt 0,001 Gew.-% bis 0,050 Gew.-%, jeweils bezogen auf die gesamte Zusammensetzung, mindestens eines UV-Absorbers aus der Gruppe der Benzotriazole enthält.

5. Formteil enthaltend eine Zusammensetzung gemäß einem der vorangehenden Ansprüche.

6. Formteil gemäß Anspruch 5, **dadurch gekennzeichnet, dass** das Formteil im Extrusionsverfahren oder im Spritzgussverfahren hergestellt wird.

7. Formteil gemäß Anspruch 6, **dadurch gekennzeichnet, dass** das Formteil eine einschichtige oder mehrschichtige Massiv-, Steg- oder Wellplatte darstellt, wobei eine oder mehrere der Schichten der Platte eine Zusammensetzung gemäß Anspruch 1 enthält.

8. Mehrschichtige Platte nach Anspruch 7, **dadurch gekennzeichnet, dass** mindestens eine Schicht enthaltend eine Zusammensetzung gemäß einem der Ansprüche 1 - 4 durch Coextrusion erzeugt wird.

9. Verwendung von Zusammensetzungen gemäß Anspruch 1 oder 2 zur Herstellung von extrudierten Formteilen.

## Claims

1. Composition containing polycarbonate and from 0.0001 wt.% to 0.1000 wt.%, preferably from 0.001 wt.% to 0.090 wt.%, of 2-(2,4-dihydroxy)phenyl-4,6-di(4-phenyl)phenyl-1,3,5-triazine.

2. Composition according to claim 1, additionally containing from 0.0001 wt.% to 10.0000 wt.% of at least one further UV absorber.

3. Composition according to claim 2, wherein the at least one further UV absorber is selected from the group of compounds containing benzotriazoles and triazines.

4. Composition according to claim 3, wherein the composition contains from 0.0001 wt.% to 10.000 wt.%, preferably from 0.0001 wt.% to 0.4000 wt.%, particularly preferably from 0.001 wt.% to 0.050 wt.%, in each case based on the total composition, of at least one UV absorber from the group of the benzotriazoles.

5. Moulding containing a composition according to any one of the preceding claims.

6. Moulding according to claim 5, **characterised in that** the moulding is produced by the extrusion process or by the injection-moulding process.

7. Moulding according to claim 6, **characterised in that** the moulding is a single-layer or multi-layer solid, multi-wall or corrugated sheet, wherein one or more of the layers of the sheet contains a composition according to claim 1.

8. Multi-layer sheet according to claim 7, **characterised in that** at least one layer containing a composition according to any one of claims 1 to 4 is produced by coextrusion.

9. Use of compositions according to claim 1 or 2 in the production of extruded mouldings.

## Revendications

1. Composition contenant du polycarbonate et 0,0001 % en poids à 0,1000 % en poids, de préférence 0,001 % en poids à 0,090 % en poids de 2-(2,4-dihydroxy)phényl-4,6-di(4-phényl)phényl-1,3,5-triazine.

2. Composition selon la revendication 1, contenant en outre 0,0001 % en poids à 10,0000 % en poids d'au moins un autre absorbeur UV.

3. Composition selon la revendication 2, dans laquelle ledit au moins un autre absorbeur UV est choisi dans le groupe des composés contenant des benzotriazoles et des triazines.

4. Composition selon la revendication 3, la composition contenant 0,0001 % en poids à 10,000 % en poids, de préférence 0,0001 % en poids à 0,4000 % en poids, de façon particulièrement préférée 0,001 % en poids à 0,050 % en poids, chaque fois par rapport à la composition totale, d'au moins un absorbeur UV choisi dans le groupe des benzotriazoles.

5. Pièce moulée contenant une composition selon l'une quelconque des revendications précédentes.

6. Pièce moulée selon la revendication 5, **caractérisée en ce que** la pièce moulée est produite dans le procédé d'extrusion ou dans le procédé de moulage par injection.

7. Pièce moulée selon la revendication 6, **caractérisée en ce que** la pièce moulée représente une plaque pleine, alvéolaire ou ondulée, monocouche ou multicouche, une ou plusieurs des couches de la plaque contenant une composition selon la revendications 1.

8. Plaque multicouche selon la revendication 7, **caractérisée en ce qu'**au moins une couche contenant une composition selon l'une quelconque des revendications 1 à 4 est produite par coextrusion.

9. Utilisation de compositions selon la revendication 1 ou 2, pour la production de pièces moulées extrudées.
